Europäisches Patentamt

European Patent Office

Office européen des brevets

(11) Veröffentlichungsnummer : **0 195 844**
**B1**

# (12) EUROPÄISCHE PATENTSCHRIFT

(45) Veröffentlichungstag der Patentschrift :
19.07.89

(51) Int. Cl.⁴ : **B 65 G 1/04**

(21) Anmeldenummer : 85111155.9

(22) Anmeldetag : 04.09.85

(54) Vorrichtung, Anlage und Verfahren zum Lagern, Transportieren und Umschlagen von zylinderförmigen Materialteilen.

(30) Priorität : 25.03.85 CH 1320/85

(43) Veröffentlichungstag der Anmeldung :
01.10.86 Patentblatt 86/40

(45) Bekanntmachung des Hinweises auf die Patenterteilung : 19.07.89 Patentblatt 89/29

(84) Benannte Vertragsstaaten :
AT BE CH DE FR GB IT LI LU NL SE

(56) Entgegenhaltungen :
DE—A— 2 440 690

(73) Patentinhaber : LISTA AG
Fabrikstrasse
CH-8586 Erlen (CH)

(72) Erfinder : Duve, Bernd
Groppenbrucherstrasse 63 a
D-4600 Dortmund 15 (DE)
Erfinder : Pater, Heinz-Georg
Vierhausen 3
D-4763 Ense (DE)

(74) Vertreter : EGLI-EUROPEAN PATENT ATTORNEYS
Horneggstrasse 4
CH-8008 Zürich (CH)

## Beschreibung

Die Erfindung betrifft eine Vorrichtung zum Lagern, Transportieren und Umschlagen von zylinderförmigen Materialteilen, insbesondere von zu bearbeitenden oder bearbeiteten Werkstücken, bei welcher die Materialteile auf nebeneinanderliegenden prismenförmigen Flächenpartien abgelegt und formschlüssig gehalten sind, weiter eine Anlage mit der Vorrichtung zum Umschlagen von zylinderförmigen Materialteilen und ein Verfahren zum Betrieb der Anlage.

Bei der Herstellung von Werkstücken ist es allgemein bekannt, die Werkstücke zu den verschiedenen Bearbeitungsstationen zu transportieren. Hierbei ist es erforderlich, dass die Werkstücke während des Transportes nicht beschädigt werden, weshalb Einrichtungen vorgesehen werden, um dies zu verhindern. Grundsätzlich handelt es sich hierbei um eine Art Verpackung, die jedoch den besonderen Bedürfnissen angepasst ist.

Es ist bekannt, zu bearbeitende und bearbeitete Werkstücke in geeigneten Behältern oder Gestellen zu lagern und zu transportieren. Sind wiederholt Serien gleicher oder ähnlicher Werkstücke zu transportieren, werden die Behälter zusätzlich mit Einrichtungen ausgestattet, in denen die Werkstücke formschlüssig gelagert werden konnen. Bekannt sind hierbei prismenartige Ablagen, d. h. geneigte Flächen, die eine spielfreie Lagerung des Werkstückes erlauben. Solche prismenförmigen Ablagen sind vor allem für die Lagerung und den Transport von zylinderförmigen Werkstücken, d. h. von Wellen, Stäben, Rohren o. dgl., bekannt. Bei den Behältern handelt es sich gewöhnlich um nach oben offene, rechteckige Behälter, in denen die Werkstücke nebeneinander in geordneter Anordnung gelagert sind. An der entsprechenden Bearbeitungsstation werden die Werkstücke manuell oder mit manuell bedienbaren Hilfsmitteln aus dem Behälter entnommen, in die Bearbeitungsstation gebracht und dort bearbeitet sowie anschliessend wieder in den Behälter abgelegt.

Im Zuge der Mechanisierung werden alle Bewegungen von und zu den Bearbeitungsstationen selbsttätig durchgeführt. Anstelle des manuellen Umschlages der Werkstücke tritt der maschinelle Umschlag mittels Manipulatoren und Robotern. Dies setzt zunächst eine genaue Positionierung der Werkstücke voraus, damit ein solcher maschineller Umschlag überhaupt möglich ist.

Eine in der älteren nicht vorveröffentlichten Druckschrift EP-A-0 174 455 beschriebene Vorrichtung dieser Art, mit der Materialteile, insbesondere Werkstücke, zum Lagern, Transportieren und Umschlagen positioniert werden, benützt hierzu Tragelemente mit einer Rasterung, die die Positionierung von Materialteilen verschiedenster Grösse und Form erlauben.

Die vorliegende Erfindung betrifft die Lagerung, den Transport und das Umschlagen von zylinderförmigen Materialteilen gleicher oder ähnlicher Form in grösserer Stückzahl. Für die Behandlung solch gleichartiger Materialteile kann die bekannte Vorrichtung ebenfalls verwendet werden. Allerdings ist es dann zweckmässiger, eine Vorrichtung einzusetzen, die ausschliesslich für den einzigen Zweck, nämlich die Positionierung zylinderförmiger Teile, ausgelegt ist. In beiden Fällen wird damit zwar die Positionierung in einer horizontalen Ebene erreicht, jedoch ist damit das Umschlagen der Materialteile durch eine maschinelle Einrichtung noch nicht zweckmässig gelöst.

Hier setzt die Erfindung ein, der die Aufgabe zugrundeliegt, eine Vorrichtung der eingangs beschriebenen Art so auszugestalten, dass das Umschlagen der Materialteile mit dieser Vorrichtung zu einer Bearbeitungsstation oder -maschine und zurück zuverlässig und ohne Behinderung durch benachbarte Materialteile erreicht wird.

Diese Aufgabe wird gemäss der Erfindung dadurch gelöst, dass in den prismenförmigen Flächenpartien im Auflagebereich der Materialteile Durchgänge bildende Aussparungen vorgesehen sind.

Die Erfindung umfasst auch eine Anlage mit der erfindungsgemässen Vorrichtung, bei welcher unter den prismenförmigen Flächenpartien bzw. den Profilstäben ein Hubwerk angeordnet ist, das einen Hubbalken mit den Durchgängen in den prismenförmigen Flächenpartien bzw. in den Profilstäben angepassten Balkenstegen aufweist, der durch die Durchgänge heb- und senkbar ist.

Die Erfindung umfasst weiter ein Verfahren zum Betrieb der Anlage, bei welchem zum Umschlagen ein Materialteil durch den Hubbalken von seiner Auflage in eine von beiden Seiten zugängliche Lage angehoben bzw. von der angehobenen Lage auf die Auflage abgesenkt wird.

Die Erfindung ist in der Zeichnung beispielsweise dargestellt und nachfolgend beschrieben. Es zeigen:

Fig. 1 eine räumliche Darstellung einer Vorrichtung zur Lagerung von Materialteilen auf Profilstäben mit Durchgänge bildenden Aussparungen für einen darunter angeordneten Hubbalken zum Anheben eines auf den Profilstäben gelagerten Materialteiles,

Fig. 2 einen teilweisen Vertikalschnitt einer Vorrichtung zum Lagern von Materialteilen auf Profilstäben,

Fig. 3 einen Vertikalschnitt einer weiteren Vorrichtung zur Lagerung von Materialteilen auf Profilstäben,

Fig. 4 einen Grundriss der Vorrichtung nach Fig. 3 und

Fig. 5 eine schematische Darstellung einer Anlage zum Umschlagen von Materialteilen mit einer in Fig. 1 - 4 dargestellten Vorrichtung.

Die Erfindung geht von der Ueberlegung aus, dass das maschinelle Umschlagen von Materialteilen, die geordnet nebeneinander in einem Behälter, Tragelement o. dgl. gelagert sind, von und zu der Bearbeitungsstelle nur dann zuverlässig durchgeführt werden kann, wenn zwischen den Materialteilen genügend Platz vorhanden ist, der Greifelementen das formschlüssige Fassen des Materialteils ermöglicht, andererseits aber dieser Platzbedarf zur Folge hat, dass auf einer gegebenen Lagerfläche entsprechend weniger Materialteile gelagert werden können, was einen erheblichen Nachteil bedeutet.

Die Erfindung zeigt nun eine Lösung, mit der dieser Nachteil überwunden werden kann und die in den Figuren in einigen Ausführungsformen dargestellt ist.

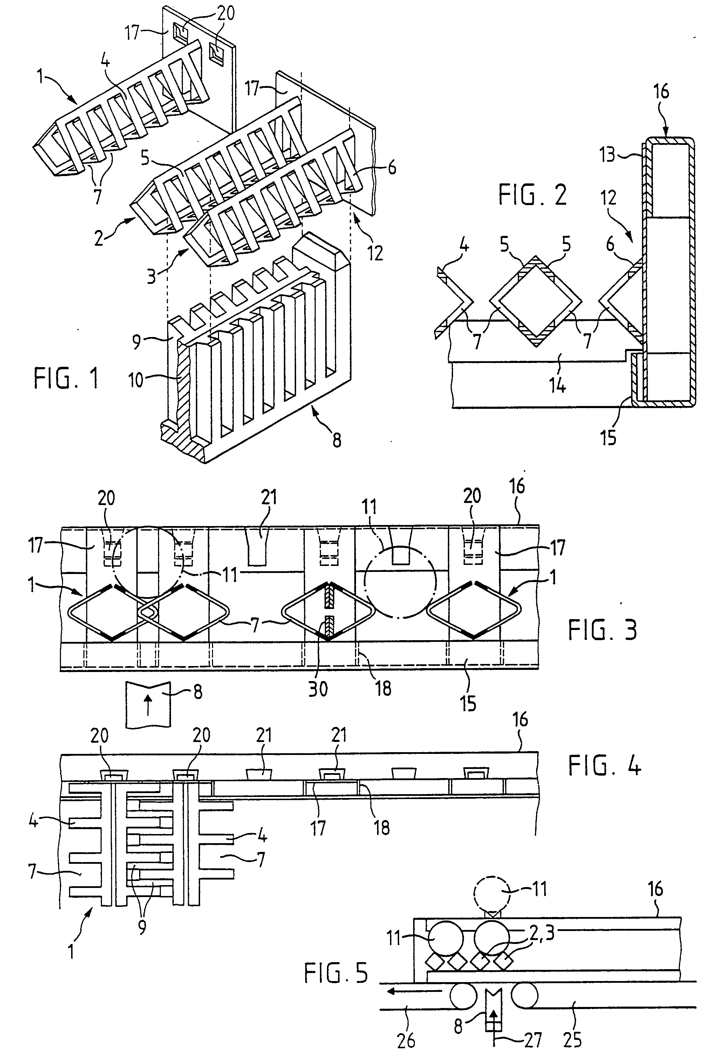

In Fig. 1 sind mehrere Profilstäbe, von denen drei Profilstäbe 1, 2, 3 sichtbar sind, dargestellt. Die Profilstäbe 1, 2, 3 bilden prismenförmige Flächenpartien 4, 5, 6, die durch Aussparungen 7 unterbrochen sind. Die Aussparungen 7 bilden Durchgänge in vertikaler Richtung, durch die ein Hubbalken 8 soweit angehoben werden kann, dass er über die prismenförmigen Flächenpartien 4, 5, 6 ragt. Der Hubbalken 8 weist eine den Aussparungen 7 entsprechende Form mit Balkenstegen 9 und einem Mittelsteg 10 auf. Stossen benachbarte Profilstäbe aneinander an, ist der Hubbalken 8 nur mit Balkenstegen 9 versehen, da dann der Mittelsteg 10 entfällt. Fluchten die Aussparungen 7 zweier benachbarter Profilstäbe nicht, sondern sind um eine halbe Teilung versetzt, sind auch die Balkenstege 8 zueinander versetzt angeordnet. Benachbarte Profilstäbe können dann ineinandergeschoben werden, wenn z. B. zylinderförmige Materialteile mit kleinem Durchmesser abgelegt werden sollen, wobei dann der Querschnitt der Balkenstege 9 entsprechend kleiner wird, so dass sie Stabform annehmen.

In vielen Fällen jedoch ist die Möglichkeit, den Abstand zwischen den Profilstäben 1, 2, 3 verändern zu können, nicht erforderlich, dies vor allem dann, wenn Materialteile gleicher Dimensionen und in grossen Stückzahlen auf den prismenförmigen Flächenpartien 4, 5, 6 abgelegt werden sollen. Eine solche Ausführung zeigt Fig. 2. Die Profilstäbe 1, 2, 3 sind mit festem Abstand in einem Gestell 12 angeordnet, das zwei Seitenwände 13 (nur eine dargestellt) aufweist, die durch Verbindungsstege 14 miteinander verbunden sind, auf denen die Profilstäbe 1, 2, 3 befestigt sind. Die Profilstäbe 1, 2, 3 weisen die Aussparungen 7 auf, durch welche ein nicht dargestellter Hubbalken bewegt werden kann. Das Gestell 12 ist in einen Fuss 15 eines Rahmens 16 gestellt, der beispielsweise Positioniermittel (nicht dargestellt) aufweist, durch welche die maschinelle Behandlung der auf den prismenförmigen Flächenpartien 4, 5, 6 gelagerten Materialteile ermöglicht wird. Es wird hierzu auf das eingangs erwähnte EP-Dokument Patent hingewiesen.

In Fig. 1 bilden die Profilstäbe 2, 3 einen Teil eines Gestells ählich wie in Fig. 2, bei der die Profilstäbe 2, 3 die Verbindungsstege zwischen den Seitenwänden 13 bilden. Die in Fig. 1 dargestellte Ausführungsform mit den Profilstäben 2, 3 stellt nur den Ausschnitt aus einem Gestell 12 mit zwei Seitenwänden 13 dar, das eine beliebige Anzahl Profilstäbe und grössere Länge als in Fig. 1 aufweisen kann. Selbstverständlich ist auch eine Ausführung möglich, bei welcher auf das Gestell 12 verzichtet wird und die Profilstäbe 1, 2, 3 direkt an der Wand des Rahmens 16 abgestützt bzw. befestigt sind.

Der Profilstab 1 in Fig. 1 ist als einzelner Profilstab mit an seinen Enden angeordneten Seitenwänden 17 ausgebildet. Die Seitenwände 17 weisen hierbei Positioniermittel 20 in Form von Vorsprüngen auf. Mit diesen Positioniermitteln kann der Profilstab 1 in einem Rahmen, z. B. einen Grundrahmen nach der genannten älteren Anmeldung, in verschiedener Lage eingesetzt werden.

Fig. 3 zeigt die praktische Ausführung mit einem als Rahmen 16 ausgebildeten Grundrahmen, der gemäss dem in Fig. 2 gezeigten Ausschnitt eine Rasterung 21 in Form von Rücksprüngen aufweist. In die Rasterung 21 sind einzelne Profilträger mit an ihren Enden befestigten Seitenwänden 17 eingesetzt, wobei bei der Ausführung nach Fig. 3 die Positioniermittel 20 nur einen Vorsprung aufweisen. Die Seitenwände 17 sind wie die Seitenwände 13 in Fig. 2 in den Fuss 15 des Rahmens 16 gestellt, so dass die Höhen- und Seitenlage der Profilstäbe 1 durch den Rahmen 16 bestimmt ist.

Aus Fig. 3 ist zudem ersichtlich, dass die Profilstäbe 1 in unterschiedlichem Abstand eingesetzt werden können. Auf der linken Seite von Fig. 3 sind zwei Profilstäbe mit einem kleinen Abstand angeordnet, so dass ihre prismenförmigen Flächenpartien 4 ineinandergreifen. Zu diesem Zweck sind die Aussparungen 7 zueinander versetzt, siehe Fig. 4. Die Aussparungen 7 sind hierbei in ihrer Breite genügend gross, so dass in jeder Aussparung 7 eine Flächenpartie 4 und zwei Balkenstege 9 des Hubbalkens 8, siehe Fig. 3, darin Platz finden.

Auf der rechten Seite von Fig. 3 sind zwei Profilstäbe 1 mit grossem Abstand angeordnet. Der dort dargestellte Kreisdurchmesser ist der kleinste Materialteil 11, der bei dieser Anordnung noch zuverlässig abgelegt werden kann, während bei der Anordnung der Profilstäbe 1 auf der linken Seite von Fig. 3 der dort eingezeichnete Durchmesser etwa den grössten Durchmesser eines Materialteiles 11 angibt, der noch zuverlässig bei dieser Anordnung abgelegt werden kann.

Aus Fig. 4 ist erkennbar, dass an der Seitenwand 17 im Fussbereich zwei Stege 18 angeformt sind, die die Standfestigkeit der beiden Seitenwände 17 verbessern.

In Fig. 5 ist eine Anlage dargestellt, mit welcher Materialteile 11, die in einem Rahmen 16 auf Profilstäben 2, 3 abgelegt sind, durch den Hubbalken 8 in die gestrichelte Lage angehoben werden. Dort können nicht dargestellte Greifmittel den Materialteil 11 unbehindert fassen und einer Bearbeitungsstation übergeben. Der freie Raum erlaubt es, dass die Greifmittel über den Materialteil 11 abgesenkt werden und dann den Materialteil 11 formschlüssig fassen können. In gleicher Weise erfolgt auch der Umschlag aus der Bearbeitungsstation in den Rahmen 16. Der Rahmen 16 ist hierbei auf Fördermitteln 25, 26, z. B. Transportbändern, gelagert und wird im Takt jeder Greifoperation um eine Materialteil-Teilung verschoben. Der Rahmen 16 ist hierbei auch seitlich durch Positioniermittel (nicht dargestellt) in derjenigen Lage gehalten, bei welcher der Hubbalken 8 durch die Aussparungen 7 der Profilstäbe 2, 3 bewegt werden kann. Durch den Pfeil 27 ist ein Hubantrieb für den Hubbalken 8 angedeutet, der beispielsweise ein Hydro- oder Pneumatik- Zylinder sein kann. Durch das Anheben der Materialteile 11 in die Greifposition wird die Greifoperation vereinfacht; die Greiforgane haben zur Ereichung der formschlüssigen Halterung der Materialteile 11 nur eine Linearbewegung « auf-zu » auszuführen.

In den Figuren 1 - 5 weisen die Profilstäbe 1, 2, 3 ein quadratisches oder trapezförmiges Profil auf. Es sind jedoch auch andere Profile anwendbar, wobei lediglich die prismenförmigen Flächenpartien 4, 5, 6 vorzusehen sind. Die Profilstäbe 1, 2, 3 können mit einer verhältnismässig grossen Länge freitragend ausgebildet werden, da die Profile durch Stege 30, siehe Fig. 3, ausreichend verstärkt werden können. Damit die verwendeten Gestelle 12 mit den Profilstäben in vertikaler Richtung während der Hubbewegung des Hubbalkens 8 gehalten sind, können, z. B. an gegenüberliegenden Seiten des Rahmens 16, Haltemittel, z. B. Schnappriegel, vorgesehen werden.

**Patentansprüche**

1. Vorrichtung zum Lagern, Transportieren und umschlagen von zylinderförmigen Materialteilen (11), insbesondere von zu bearbeitenden oder bearbeiteten Werkstücken, bei welcher die Materialteile auf nebeneinanderliegenden prismenförmigen Flächenpartien (4, 5, 6) abgelegt und formschlüssig gehalten sind, dadurch gekennzeichnet, dass auf den prismenförmigen Flächenpartien (4, 5, 6) im Auflagebereich der Materialteile (11) Durchgänge bildende Aussparungen (7) vorgesehen sind.

2. Vorrichtung nach Anspruch 1, dadurch gekennzeichnet, dass die prismenförmigen Flächenpartien (4, 5, 6) Teile von Profilstäben (1, 2, 3) sind, von denen jeweils zwei benachbarte Profilstäbe eine Auflage für einen Materialteil (11) bilden.

3. Vorrichtung nach Anspruch 2, dadurch gekennzeichnet, dass die benachbarten Profilstäbe (1, 2, 3) einander gegenüberliegende oder versetzte Aussparungen (7) aufweisen.

4. Vorrichtung nach Anspruch 2 oder 3, dadurch gekennzeichnet, dass die Profilstäbe (1, 2, 3) Hohlstäbe mit einem polygonalem Profil sind, wobei die Aussparungen (7) in zwei oder mehr übereinanderliegenden Stabwänden vorgesehen sind.

5. Vorrichtung nach einem der Ansprüche 1 bis 4, dadurch gekennzeichnet, dass die prismenförmigen Flächenpartien (4, 5, 6) bzw. die Profilstäbe (1, 2, 3) an ihren Enden in einem Rahmen (16) mit gleichen oder verschiedenen Abständen abgestützt oder befestigt sind.

6. Vorrichtung nach Anspruch 5, dadurch gekennzeichnet, dass die prismenförmigen Flächenpartien (4, 5, 6) bzw. die Profilstäbe (1, 2, 3) an ihren Enden einzeln oder gemeinsam mit einer Seitenwand (17) versehen und mit diesen Wänden in dem Rahmen (16) einsetzbar sind.

7. Vorrichtung nach Anspruch 6, dadurch gekennzeichnet, dass in dem Rahmen (16) und in den Seitenwänden (17) Positioniermittel (20, 21), z. B. Vorsprünge und Rücksprünge, für die vorbestimmte Anordnung der prismenförmigen Flächenpartien (4, 5, 6) bzw. der Profilstäbe (1, 2, 3) im Rahmen (16) vorgesehen sind.

8. Vorrichtung nach Anspruch 5, dadurch gekennzeichnet, dass die prismenförmigen Flächenpartien (4, 5, 6) bzw. die Profilstäbe über Verbindungsstege (14) mit Seitenwänden (13) verbunden sind.

9. Anlage zum Umschlagen von zylinderförmigen Materialteilen (11), insbesondere von zu bearbeitenden oder bearbeiteten Werkstücken, mit einer Vorrichtung nach einem der Ansprüche 1 bis 8, dadurch gekennzeichnet, dass unter den prismenförmigen Flächenpartien (4, 5, 6) bzw. den Profilstäben (1, 2, 3) ein Hubwerk (27) angeordnet ist, das einen Hubbalken (8) mit den Aussparungen (7) in den prismenförmigen Flächenpartien bzw. in den Profilstäben angepassten Stegen (9, 10) aufweist, der durch die Aussparungen (7) hindurch heb- und senkbar ist.

10. Anlage nach Anspruch 9, dadurch gekennzeichnet, dass der Hubbalken (8) stirnseitig eine prismenförmige Auflagefläche aufweist.

11. Verfahren zum Betrieb der Anlage nach Anspruch 9 oder 10, dadurch gekennzeichnet, dass zum umschlagen ein Materialteil (11) durch den Hubbalken (8) von seiner Auflage in eine seitlich zugängliche Lage angehoben bzw. von der angehobenen Lage auf die Auflage abgesenkt wird.

12. Verfahren nach Anspruch 11, dadurch gekennzeichnet, dass zum Umschlagen mehrerer Materialteile (11) nach jedem Hub des Hubbalkens (8) die Vorrichtung um einen der Teilung der Materialteile entsprechenden Weg seitlich verschoben wird.

**Claims**

1. Device for storing, transporting and transferring cylindrical parts (11) particularly of workpieces to be worked on or worked on ones in which the parts are supported on adjacently lying prismatic shaped surfaces (4, 5, 6) and held positively, characterised in that on the prismatic surfaces (4, 5, 6) in the support region of the parts (11) cutouts (7) are provided forming throughways.

2. Device according to Claim 1, characterised in that the prismatic shaped surfaces (4, 5, 6) are parts of shaped bars (1, 2, 3) of which in each case to neighbouring shaped bars form a support for one part (11).

3. Device according to Claim 2, characterised in that the adjacent shaped bars (1, 2, 3) have cutouts (7) lying opposite one another or offset.

4. Device according to Claim 2 or 3, characterised in that the shaped bars (1, 2, 3) are hollow bars of a polygonal shape wherein the cutouts (7) are provided in two or more overlying bar walls.

5. Device according to one of Claims 1 to 4, characterised in that the prismatic shaped surfaces (4, 5, 6) or the shaped bars (1, 2, 3) are supported or fixed at their ends in a frame (16) at the same or various distances.

6. Device according to Claim 5, characterised in that the prismatic shaped surfaces (4, 5, 6) or the shaped bars (1, 2, 3) are provided at their ends individually or together with a side wall (17) and can be set with these walls into the frame (16).

7. Device according to Claim 6, characterised in that in the frame (16) and in the side walls (7) positioning means (20, 21), e. g. projections and recesses are provided for the predetermined arrangement of the prismatic shaped surfaces (4, 5, 6) or the shaped bars (1, 2, 3) in the frame (16).

8. Device according to Claim 5, characterised in that the prismatic shaped surfaces (4, 5, 6) or the shaped bars are connected via connection bars (14) with side walls (13).

9. Installation for transferring cylindrical parts (11) particularly of workpieces to be worked on or worked on ones with a device according to one of Claims 1 to 8 characterised in that below the prismatic surfaced parts (4, 5, 6) or the shaped bars (1, 2, 3) a lifting unit (27) is arranged which has a lifting beam (8) with bars (9, 10) matched to the cutouts (7) in the prismatic surface parts or in the shaped bars which can be lifted through the cutouts (7) and can be lowered.

10. Installation according to Claim 9, characterised in that the lifting beam (8) has on its front face a prismatic shaped support surface.

11. Process for operating the installation according to Claim 9 or 10, characterised in that for transfer a part (11) is lifted by the lifting beam (8) from its support into a laterally accessible position or is lowered from the lifted position on to the support.

12. Process according to Claim 11, characterised in that for the transfer of several parts after each stroke of the lifting beam (8) the device is moved sideways by a path corresponding to the separation of the parts.

**Revendications**

1. Dispositif d'emmagasinage, de transport et de transfert de pièces (11) cylindriques, en particulier de pièces d'ouvrage à usiner ou usinées, dans lequel les pièces sont déposées sur des parties de surface (4, 5, 6) prismatiques juxtaposées, et sont maintenues par concordance de forme, caractérisé en ce que des évidements (7) formant des ajours sont prévus sur les parties de surface (4,5,6) prismatiques, dans la zone d'appui des pièces (11).

2. Dispositif selon la revendication 1, caractérisé en ce que les parties de surface prismatiques (4, 5, 6) sont des parties de barres profilées (1, 2, 3) dont deux barres profilées voisines forment un appui pour une pièce (11).

3. Dispositif selon la revendication 2, caractérisé en ce que les barres profilées (1, 2, 3) voisines présentent des évidements (7) se faisant face ou décalés.

4. Dispositif selon la revendication 2 ou 3, caractérisé en ce que les barres profilées (1, 2, 3) sont des barres creuses de profil polygonal, les évidements (7) étant prévus dans deux parois de barres superposées ou plus.

5. Dispositif selon l'une des revendications 1 à 4, caractérisé en ce que les parties de surface (4, 5, 6) prismatiques ou les barres profilées (1, 2, 3) prennent appui ou sont fixées par leurs extrémités, dans un châssis (16), régulièrement ou irrégulièrement espacées.

6. Dispositif selon la revendication 5, caractérisé en ce que les parties de surface prismatiques (4, 5, 6) ou les barres profilées (1, 2, 3) sont pourvues à leurs extrémités, séparément ou ensemble, d'une paroi latérale (17) et peuvent être insérées dans le châssis (16), avec ces parois.

7. Dispositif selon la revendication 6, caractérisée en ce que dans le châssis, des moyens de positionnement (20, 21), par exemple des saillies et des creux, sont prévus dans des parois latérales (17), pour la mise en place prédéterminée des parties de surface prismatiques (4, 5, 6) ou des barres profilées (1, 2, 3) dans le châssis (16).

8. Dispositif selon la revendication 5, caractérisé en ce que les parties de surface prismatiques (4, 5, 6) ou les barres profilées sont reliées aux parois latérales (13) par des pièces de liaison (14).

9. Installation de transfert de pièces (11) cylindriques, en particulier de pièces d'ouvrage à usiner ou usinées, comportant un dispositif selon l'une des revendications 1 à 8, caractérisée en ce qu'un engin de levage (27) est placé sous les parties de surface prismatiques (4, 5, 6) ou les barres profilées (1, 2, 3), lequel engin de levage comporte une poutre de levage (8) avec des âmes (9, 10) adaptées aux évidements (7) pratiqués dans les parties de surface prismatiques ou dans les barres profilées, et qui peut se lever ou s'abaisser en passant à travers les évidements (7).

10. Installation selon la revendication 9, caractérisée en ce que la poutre de levage (8) comporte sur sa face frontale, une surface d'appui prismatique.

11. Procédé d'exploitation de l'installation selon la revendication 9 ou 10, caractérisé en ce que pour le transfert, une pièce (11) est relevée de son appui pour passer dans une position accessible latéralement, ou abaissée de la position relevée sur l'appui, par la poutre de levage (8).

12. Procédé selon la revendication 11, caractérisé en ce que pour le transfert de plusieurs pièces (11) après chaque course de la poutre de levage (8), le dispositif est poussé latéralement sur une distance correspondant à une division des pièces.

FIG. 1

FIG. 2

FIG. 3

FIG. 4

FIG. 5